# EUROPEAN PATENT APPLICATION

(11) **EP 2 712 112 A1**
(43) Date of publication of application: **26.03.2014**
(21) Application number: 12799946.4
(22) Date of filing: 13.06.2012
(51) Int. Cl.: H04L 1/18

(54) **METHOD APPARATUS AND SYSTEM FOR COORDINATED MULTIPLE POINT RETRANSMISSION**

(30) Priority: 13.06.2011 CN 201110157705
(71) Applicant: Huawei Technologies Co., Ltd, Shenzhen, Guangdong 518129 (CN)
(72) Inventor: ZHOU, Mingyu, Shenzhen Guangdong 518129 (CN); XIA, Liang, Shenzhen Guangdong 518129 (CN); REN, Xiaotao, Shenzhen Guangdong 518129 (CN); ZHOU, Yongxing, Shenzhen Guangdong 518129 (CN)
(74) Representative: Thun, Clemens
(86) International application number: PCT/CN2012/076809
(87) International publication number: WO 2012/171455

(57) **Abstract**

The present invention provides a method, an apparatus, and a system for CoMP retransmission. The method includes: sending downlink control signaling to a user equipment UE, so that the UE receives, according to the downlink control signaling, an initially transmitted signal sent by a serving transmission point and a cooperative transmission point by joint processing mode; receiving first NAK information corresponding to the initially transmitted signal and returned by the UE, and sending a retransmitted signal corresponding to the initially transmitted signal to the UE according to the first NAK information, where the initially transmitted signal also corresponds to second NAK information sent by the UE to the cooperative transmission point, where the second NAK information is used to instruct the cooperative transmission point to, when the serving transmission point sends the retransmitted signal to the UE, reduce interference to the UE with scheduling. According to embodiments of the present invention, the CoMP technology can still be used in a scenario where an RTT remains unchanged and a backhaul transmission time is long.

## Description

This application claims priority to Chinese Patent Application No. 201110157705.0, filed with the Chinese Patent Office on June 13, 2011 and entitled "METHOD, APPARATUS, AND SYSTEM FOR COMP RETRANSMISSION", which is incorporated herein by reference in its entirety.

### TECHNICAL FIELD

The present invention relates to mobile communications technologies, and in particular, to a method, an apparatus, and a system for coordinated multiple point transmission/reception (coordinated multiple point transmission/reception, CoMP) retransmission.

### BACKGROUND

In the CoMP technology, multiple transmission points can serve the same user equipment (User Equipment, UE) simultaneously by joint processing. The multiple transmission points are connected by using a wired connection and the wired connection is also called a backhaul (Backhaul). UE related data or signaling can be transmitted over interfaces between the transmission points. This helps multiple transmission points to serve the UE so as to increase strengths of signals received by the UE and improve the transmission efficiency. A transmission point that sends control signaling to the UE is called a serving transmission point (Serving transmission point), and other transmission points are called cooperative transmission points (Cooperative transmission point). Transmission points may include access points (Access Point, AP), remote radio equipments (Remote Radio Equipment, RRE), remote radio heads (Remote Radio Head, RRH), remote radio units (Remote Radio Unit, RRU), pico cells (Pico cells), home base stations (Femto cell or Home eNodeB, HeNB), and the like. In addition, a transmission point may be connected to a base station, and sending and receiving operations of the transmission point are controlled by the base station, which means that the transmission point is subordinate to the base station; or a transmission point itself is a base station. According to different base stations that transmission points with a cooperative relationship are subordinate to, CoMP can be divided into intra-base station CoMP and inter-base station CoMP. Intra-base station CoMP means that all transmission points with a cooperative relationship are subordinate to the same base station, and inter-base station CoMP means that transmission points with a cooperative relationship are subordinate to different base stations. In an inter-base station CoMP scenario, UE related data or signaling needs to pass an interface between base stations. Therefore, a transmission delay between the transmission points is long.

In the hybrid automatic repeat request (Hybrid Automatic Repeat request, HARQ) technology, a transmission point firstly sends an initially transmitted data packet to a UE. Then the UE makes a decoding attempt and learns whether the decoding is successful. If the decoding is successful, the UE returns an acknowledgement (Acknowledgement, ACK) to the transmission point; and if the decoding is unsuccessful, the UE returns a non-acknowledgement (Non-Acknowledgement, NAK) to the transmission point. If the transmission point receives a NAK, the transmission point retransmits the data packet till the UE returns an ACK or the number of times of retransmission reaches a set maximum number of times of transmission. Generally, a time interval between two times of transmission (including between an initial transmission and the first time of retransmission or between the two times of neighboring retransmission) of the same data packet is called a round-trip time (Round-Trip Time, RTT). For example, in a Long Term Evolution (Long Term Evolution, LTE) system, the RTT is generally eight milliseconds (ms).

In a CoMP communication system, the HARQ process is complex. This is because the serving transmission point needs to send related signaling to the cooperative transmission point before a retransmission, and data retransmission is performed only after the serving transmission point and the cooperative transmission point determine on a cooperative operation.

In the prior art, when a time needed by a backhaul transmission between a serving transmission point and a cooperative transmission point is relatively long, the RTT needs to be prolonged in a CoMP scenario. However, a prolonged RTT will make a communication system with the prolonged RTT incompatible with a communication system without a prolonged RTT, and increases system complexity.

### SUMMARY

Embodiments of the present invention provide a method, an apparatus, and a system for CoMP retransmission, so that the CoMP technology can still be used when an RTT remains unchanged and a backhaul transmission time is relatively long.

In one aspect, a method for CoMP retransmission is provided, including:
sending downlink control signaling to a user equipment UE, so that the UE receives, according to the downlink control signaling, an initially transmitted signal sent by a serving transmission point and a cooperative transmission point by joint processing; and
receiving first NAK information corresponding to the initially transmitted signal and returned by the UE, and sending, according to the first NAK information, a retransmitted signal corresponding to the initially transmitted signal to the UE, where the initially transmitted signal also corresponds to second NAK information sent by the UE to the cooperative transmission point, where the second NAK information is used to instruct the cooperative transmission point to, when the serving transmission point sends the retransmitted signal to the UE, reduce interference to the UE with scheduling.

In one aspect, an apparatus for CoMP retransmission is provided, including:
a transmitting module, configured to send downlink control signaling to a user equipment UE, so that the UE receives, according to the downlink control signaling, an initially transmitted signal sent by a serving transmission point and a cooperative transmission point by joint processing; and
a retransmitting module, configured to receive first NAK information corresponding to the initially transmitted signal and returned by the UE, and send, according to the first NAK information, a retransmitted signal corresponding to the initially transmitted signal to the UE, where the initially transmitted signal also corresponds to second NAK information sent by the UE to the cooperative transmission point, where the second NAK information is used to instruct the cooperative transmission point to, when the serving transmission point sends the retransmitted signal to the UE, reduce interference to the UE with scheduling.

In one aspect, a system for CoMP retransmission is provided, including:
a serving transmission point and a cooperative transmission point;
where the serving transmission point is configured to send downlink control signaling to a user equipment UE;
the serving transmission point and the cooperative transmission point are configured to send an initially transmitted signal to the UE by joint processing;
the serving transmission point is further configured to receive first NAK information corresponding to the initially transmitted signal and returned by the UE, and send a retransmitted signal corresponding to the initially transmitted signal to the UE according to the first NAK information; and
the cooperative transmission point is further configured to receive second NAK information corresponding to the initially transmitted signal and returned by the UE, and, according to the second NAK information, when the serving transmission point sends the retransmitted signal to the UE, reduce interference to the UE with scheduling.

In one aspect, a method for CoMP retransmission is provided, including:
sending an initially transmitted signal to a user equipment UE by joint processing with a serving transmission point; and
receiving second NAK information corresponding to the initially transmitted signal and returned by the UE, and, when the serving transmission point sends a retransmitted signal to the UE according to first NAK information returned by the UE, reducing interference to the UE with scheduling.

In one aspect, an apparatus for CoMP retransmission is provided, including:
a transmitting module, configured to send an initially transmitted signal to a user equipment UE by joint processing with a serving transmission point; and
a receiving and scheduling module, configured to receive second NAK information corresponding to the initially transmitted signal and returned by the UE, and, when the serving transmission point sends a retransmitted signal to the UE according to first NAK information returned by the UE, reduce interference to the UE with scheduling

According to the foregoing technical solution, in the embodiments of the present invention, a signal is retransmitted by a serving transmission point rather than retransmitted after the serving transmission point and a cooperative transmission point perform a coordinated operation. Because the signal is retransmitted not necessarily after signaling is transmitted in a backhaul, the time of the signal retransmission is irrelevant to the backhaul transmission time, which can avoid a problem that a needed RTT is relatively long due to a relatively long backhaul transmission time. In this way, the CoMP technology can still be used in a scenario where the RTT remains unchanged and the backhaul transmission time is relatively long.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic flowchart of a method according to a first embodiment of the present invention;
FIG. 2 is a schematic diagram illustrating transmission of an initially transmitted signal by a serving transmission point and a cooperative transmission point according to an embodiment of the present invention;
FIG. 3 is a schematic diagram illustrating transmission of a retransmitted signal by using only a serving transmission point according to an embodiment of the present invention;
FIG. 4 is a schematic flowchart of a method according to a second embodiment of the present invention;
FIG. 5 is a schematic flowchart of a method according to a third embodiment of the present invention;
FIG. 6 is a schematic structural diagram of an apparatus according to a fourth embodiment of the present invention;
FIG. 7 is a schematic flowchart of a method according to a fifth embodiment of the present invention;
FIG. 8 is a schematic structural diagram of an apparatus according to a sixth embodiment of the present invention; and
FIG. 9 is a schematic structural diagram of a system according to a seventh embodiment of the present invention.

### DESCRIPTION OF EMBODIMENT(S)

To make the objectives, technical solutions, and advantages of the embodiments of the present invention more comprehensible, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

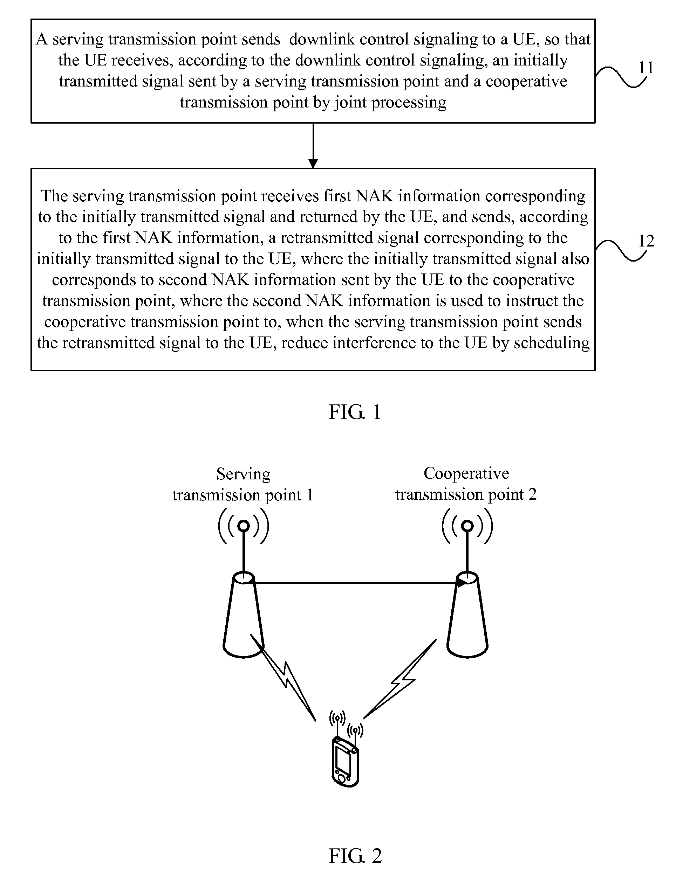

FIG. 1 is a schematic flowchart of a method according to a first embodiment of the present invention, where the method includes the following steps:

Step 11: A serving transmission point sends downlink control signaling to a UE, so that the UE receives, according to the downlink control signaling, an initially transmitted signal which is sent by the serving transmission point and a cooperative transmission point by j oint processing.

In the CoMP technology, a base station may determine a serving transmission point and a cooperative transmission point according to channel quality, for example, the base station determines a transmission point with best channel quality between the base station and the UE as the serving transmission point, and determines, from other transmission points, a transmission point with signal quality between the base station and the UE greater than a specific threshold as the cooperative transmission point.

Then, the serving transmission point sends the downlink control signaling to the UE, for example, physical downlink control channel (Physical Downlink Control Channel, PDCCH) signaling, while the cooperative transmission point does not send downlink control signaling to the UE. The UE can receive, according to the downlink control signaling, a signal sent by the corresponding serving transmission point and cooperative transmission point. The downlink control signaling indicates at least one of a time-frequency resource and a modulation and coding scheme (Modulation and Coding Scheme, MCS) used by the foregoing transmission points when sending the foregoing signal. The downlink control signaling may further include the number of transmission layers in space and a precoding matrix indicator (Precoding Matrix Indicator, PMI).

In an embodiment, the serving transmission point may send downlink control signaling to the UE only once; and in this case, downlink control signaling is the same each time when the foregoing signal (the signal may be an initially transmitted signal or a retransmitted signal) is transmitted. Or the serving transmission point may send downlink control signaling each time when the foregoing signal (the signal may be initially transmitted or retransmitted) is transmitted; and in this case, downlink control signaling corresponding to each transmission may be different.

In an embodiment, the sending an initially transmitted signal to a UE by a serving transmission point and a cooperative transmission point by joint processing may be specifically as follows.

For example, FIG. 2 is a schematic diagram illustrating transmission of an initially transmitted signal by a serving transmission point and a cooperative transmission point by joint processing according to an embodiment of the present invention. Using the joint processing (Joint Processing, JP) mode can enhance the strength of a signal received by a UE, which facilitates improvement of the transmission efficiency.

The JP mode may be as follows: the serving transmission point sends service data to the UE; and the serving transmission point sends UE-related information used to schedule the UE to the cooperative transmission point, where the UE-related information includes service data of the UE that needs to be sent by the cooperative transmission point and signaling that controls the cooperative transmission point to send the service data, so that the cooperative transmission point sends the service data of the UE to the UE according to the signaling.

In the foregoing joint processing mode, the serving transmission point and the cooperative transmission point send the initially transmitted signal by using the foregoing joint processing mode at a set time point. Further, the set time point may be represented by a fixed value after the serving transmission point sends, to the cooperative transmission point, UE-related information used to schedule the UE. For example, information is generally transmitted in units of transmission time interval (Transmission Time Interval, TTI). In an LTE system, one TTI lasts 1 ms. It is assumed that the fixed value is eight TTIs. If the serving transmission point begins to send the UE-related information to the cooperative transmission point at a k^{th} TTI, the serving transmission point and the cooperative transmission point send an initially transmitted signal to the UE at a (k+8)^{th} TTI.

Alternatively, a fixed value set for the serving transmission point may be different from a fixed value set for the cooperative transmission point. For example, because a transmission between the serving transmission point and the cooperative transmission point is subject to a delay, if a relatively long. delay exists between when the serving transmission point begins to send the UE-related information and when the cooperative transmission point begins to receive the UE related information, the UE-related information may include service data of the UE that needs to be sent by the cooperative transmission point and signaling that controls the cooperative transmission point to send the service data. When the serving transmission point sends an initially transmitted signal and when the cooperative transmission point sends an initially transmitted signal to the UE need to be set to ensure that the UE receives simultaneously the initially transmitted signal sent by the serving transmission point and the initially transmitted signal sent by the cooperative transmission point. In an embodiment, when the serving transmission point sends an initially transmitted signal to the UE may be set to a t1^{th} TTI after when the serving transmission point begins to send the UE-related information to the cooperative transmission point. A delay for obtaining UE-related information sent by the serving transmission point to the cooperative transmission point is (t1-t2). Therefore, when the cooperative transmission point sends an initially transmitted signal to the UE may be set to a t2^{th} TTI after when the cooperative transmission point begins to receive the UE-related information from the serving transmission point.

In an embodiment, the serving transmission point and the cooperative transmission point determine, in a process of transmission of information over an interface between them, a time point, and begin to send the initially transmitted signal by joint processing at the time point.

For example, when the serving transmission point begins to send the UE-related information to the cooperative transmission point, the serving transmission point sends, to the cooperative transmission point, information used to indicate time for sending an initially transmitted signal; after receiving the information, the cooperative transmission point may send, according to the information used to indicate time for sending an initially transmitted signal, an initially transmitted signal to the UE simultaneously with the serving transmission point. For example, information sent by the serving transmission point to the cooperative transmission point includes "sending an initially transmitted signal at a t^{th} TTI"; or information sent by the serving transmission point to the cooperative transmission point includes "sending an initially transmitted signal at a 5^{th} TTI after receiving the UE related data and/or signaling".

Step 12: The serving transmission point receives first NAK information corresponding to the initially transmitted signal and returned by the UE, and sends, according to the first NAK information, a retransmitted signal corresponding to the initially transmitted signal to the UE, where the initially transmitted signal also corresponds to second NAK information sent by the UE to the cooperative transmission point, where the second NAK information is used to instruct the cooperative transmission point to, when the serving transmission point sends the retransmitted signal to the UE, reduce interference to the UE with scheduling.

If the UE decodes the initially transmitted signal successfully according to the downlink control signaling, the UE returns ACK information; and if the UE fails to decode the initially transmitted signal according to the downlink control signaling, the UE returns NAK information.

A resource used to send the feedback information may be sent by the serving transmission point to the UE, and information indicating the resource may be carried in the downlink control signaling or other signaling sent by the serving transmission point to the UE.

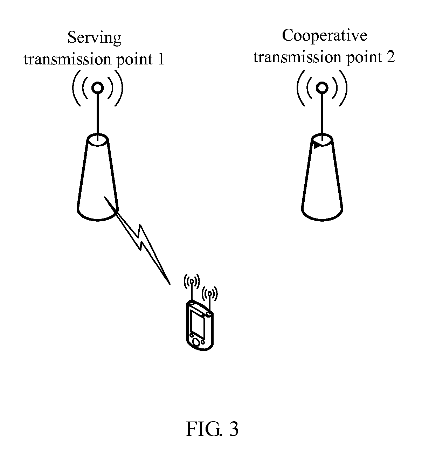

After the serving transmission point and the cooperative transmission point receive the NAK information, refer to FIG. 3, FIG. 3 is a schematic diagram illustrating transmission of a retransmitted signal only by a serving transmission point according to an embodiment of the present invention, where only the serving transmission point sends a retransmitted signal and the cooperative transmission point 2 does not need to send a retransmitted signal to the UE. In this way, the serving transmission point 1 does not need to transmit UE-related information to the cooperative transmission point 2, which reduces complexity of the cooperative transmission point 2 and reduces requirements on a backhaul transmission delay. For example, in an LTE system, a time interval between a retransmission and an initial transmission can still be 8 ms.

In another aspect, because a determined time interval exists between an initially transmitted signal and a retransmitted signal, the cooperative transmission point can determine, according to the determined time interval, when the serving transmission point retransmits a signal, and therefore the cooperative transmission point can reduce interference to the UE when the serving transmission point retransmits the signal.

The cooperative transmission point may reduce interference to the UE by using at least one of the following modes: scheduling no other UEs, reducing transmit power of the cooperative transmission point, using a precoding matrix causing less interference to the UE, and using a beam causing less interference to the UE. The modes of scheduling no other UEs and reducing transmit power of the cooperative transmission point are called cooperative scheduling, and using a precoding matrix causing less interference to the UE and using a beam causing less interference to the UE are called cooperative beam forming. By using such scheduling modes, the UE receives less interference when the serving transmission point 1 sends a retransmitted signal to the UE, which helps transmission of the signal.

In this embodiment, a signal is retransmitted by a serving transmission point, rather than retransmitted after the serving transmission point and the cooperative transmission point perform a coordinated operation. Because the signal is retransmitted not necessarily after signaling is transmitted in a backhaul, the time of signal retransmission is irrelevant to the backhaul transmission time, which can avoid a problem that a needed RTT is relatively long due to a relatively long backhaul transmission time. In this way, the CoMP technology can still be used in a scenario where the RTT remains unchanged and the backhaul transmission time is relatively long. In addition, in this embodiment, when the serving transmission point retransmits a signal to a UE, the cooperative transmission point reduces interference to the UE, which can increase the quality of signal transmission.

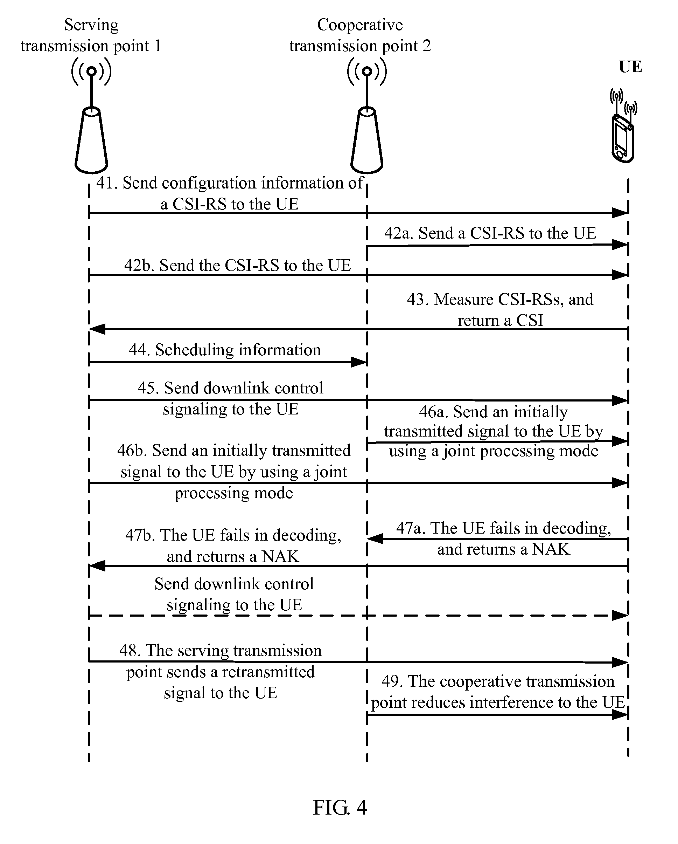

FIG. 4 is a schematic flowchart of a method according to a second embodiment of the present invention. As shown in FIG. 4, the method includes the following steps:

Step 41: A serving transmission point sends configuration information of a channel state information-reference signal (Channel State Information-Reference Signal, CSI-RS) to a UE.

The configuration information of the CSI-RS may be sent by the serving transmission point to the UE by using signaling, and the configuration information of the CSI-RS includes frequency information, time information, and a sequence configuration parameter of the CSI-RS.

In addition, the serving transmission point may send configuration information of one set or multiple different sets of the CSI-RS to the UE. After receiving the configuration information of the one set or multiple different sets of the CSI-RS, the UE measures a CSI-RS according to the configuration information of the one set or multiple different sets of the CSI-RS, and returns an obtained CSI corresponding to the configuration information of the one set or multiple different sets of the CSI-RS to the serving transmission point.

In an embodiment, the serving transmission point sends, to the UE, the configuration information of the one set or multiple different sets of the CSI-RS and a mapping relationship with a serving transmission point or cooperative transmission point corresponding to the configuration information of the one set or multiple different sets of the CSI-RS. After receiving the configuration information of the one set or multiple different sets of the CSI-RS and the mapping relationship, the UE measures a CSI-RS according to the configuration information of the one set or multiple different sets of the CSI-RS, and returns an obtained CSI to the serving transmission point.

Step 42a: A cooperative transmission point sends a CSI-RS to the UE.

Step 42b: The serving transmission point sends a CSI-RS to the UE.

Step 42a and step 42b are not limited to a time sequence.

Step 43: The UE measures the CSI-RSs according to the configuration information of the CSI-RS to obtain a CSI, and sends the CSI to the serving transmission point.

The CSI includes at least one of a rank indicator (Rank Indicator, RI), a precoding matrix indicator (Precoding Matrix Indicator, PMI), and a modulation and coding scheme (Modulation and Coding Scheme, MCS). The RI refers to the number of downlink transmission layers suggested by the UE, the PMI refers to an index of a precoding matrix or vector suggested by the UE for use in downlink transmission, and the MCS refers to an index of a modulation and coding scheme suggested by the UE for use in downlink transmission.

In addition, there may be multiple CSIs that correspond to multiple CSI-RSs. Using PMI as an example, a precoding matrix list is stored on the UE side and the base station side; when the UE detects a CSI-RS sent by the serving transmission point or the cooperative transmission point, the UE obtains a downlink channel matrix H; then, the UE selects, by calculation, a best precoding matrix from the precoding matrix list according to the downlink channel matrix H, and returns the best precoding matrix to the serving transmission point. When the UE detects CSI-RSs sent by multiple transmission points, the UE returns multiple PMI indexes index. For example, the UE returns to the serving transmission point a PMI corresponding to the serving transmission point 1, which is *PMI*₁, and returns to the serving transmission point 1 a PMI corresponding to the cooperative transmission point 2, which is *PMI*₂. The process of selecting, by calculation, a best precoding matrix from the precoding matrix list is as follows: a rule for selecting, by calculation, a best precoding matrix from the precoding matrix list may be a rule of selecting a calculated synthetic channel with best quality. That is, assuming that an i^{th} precoding matrix is *Pᵢ*, a best precoding matrix is a precoding matrix which makes ∥*HPᵢ*∥ to be maximum, where ∥·∥ refers to a norm operation.

In an embodiment, the CSI may include one CSI, and the one CSI reflects joint channel state information of multiple CSI-RSs, that is, joint channel state information corresponding to the serving transmission point and the cooperative transmission point. For example, the UE may obtain, by detection, a downlink channel matrix *H*₁ corresponding to the serving transmission point 1 and a downlink channel matrix *H*₂ corresponding to the cooperative transmission point 2, and combines *H*₁ and *H*₂ into a matrix *H*₃; and then, the UE selects, by calculation, a best precoding matrix from the precoding matrix list, and returns the best precoding matrix to the serving transmission point. The process of selecting, by calculation, a best precoding matrix from the precoding matrix list is as follows: a rule for selecting, by calculation, a best precoding matrix from the precoding matrix list may be a rule of selecting a calculated synthetic channel with best quality. That is, assuming that an i^{th} precoding matrix is *Pᵢ*, the best precoding matrix is a precoding matrix which makes ∥*H₃Pᵢ*∥ to be maximum.

Step 44: The serving transmission point determines scheduling information according to the CSI, and sends the scheduling information to the cooperative transmission point.

For example, the serving transmission point 1 determines scheduling information according to the CSI. Using PMI as an example, assuming that only one CSI is returned and the index of the best precoding matrix obtained by calculation is 1, the serving transmission point 1 determines that the precoding matrix with the index 1 is used for a downlink data signal sent to the UE, and then sends the scheduling information to the cooperative transmission point 2, where the scheduling information indicates that the precoding matrix with the index 1 is used, which helps the cooperative transmission point 2 to cooperate with the serving transmission point 1 in sending a signal to the UE by using the precoding matrix with the index 1. For example, it is assumed that the serving transmission point 1 has two antenna ports, the cooperative transmission point 2 has two antenna ports, and the precoding matrix with the index 1 is [A1, A2, A3, A4]. The serving transmission point 1, therefore, sends a signal by using a weight value of [A1, A2] and the cooperative transmission point sends a signal by using a weight value of [A3, A4]. For the UE, this is equivalent to the effect that four antenna ports use the precoding matrix with the index 1, that is, the downlink control signaling carries the information "precoding matrix with index 1". For other information of the CSI, for example, RI and MCS, a solution similar to the PMI solution may be used. For example, the serving transmission point includes an index of an MCS in the CSI sent by the UE in the scheduling information sent to the cooperative transmission point.

Step 45: The serving transmission point determines downlink control signaling according to the CSI sent by the UE, and sends the downlink control signaling to the UE.

For example, when the CSI sent by the UE to the serving transmission point indicates that the precoding matrix with the index 1 is suitable for use in the channel state measured by the UE, the serving transmission point determines that a downlink data signal sent to the UE is pre-coded by using the precoding matrix with the index 1, and includes information indicating that the precoding matrix with the index 1 is used to pre-code the downlink data signal in downlink control signaling, and sends the downlink control signaling to the UE.

Step 44 and step 45 are not limited to a time sequence.

Step 46a to step 46b: The serving transmission point and the cooperative transmission point send an initially transmitted signal to the UE by joint processing according to the scheduling information.

Step 47a: The cooperative transmission point receives feedback information of the UE.

Step 47b: The serving transmission point receives feedback information of the UE.

If the UE fails to decode the initially transmitted signal according to the downlink control signaling, the feedback information is NAK information.

Step 47a and step 47b are not limited to a time sequence.

Step 48: When the feedback information received by the serving transmission point is NAK information, the serving transmission point sends a retransmitted signal corresponding to the initially transmitted signal to the UE.

Optionally, before sending a retransmitted signal to the UE, the serving transmission point may also send downlink control signaling to the UE.

Step 49: If the cooperative transmission point receives NAK information returned by the UE, the cooperative transmission point reduces interference to the UE when the serving transmission point retransmits the signal to the UE.

For specific contents of step 46a to step 49, reference may be made to related contents of the first embodiment.

In this embodiment, a signal is retransmitted by a serving transmission point rather than retransmitted after the serving transmission point and a cooperative transmission point perform a coordinated operation. Because the signal is retransmitted not necessarily after signaling is transmitted in a backhaul, the time of signal retransmission is irrelevant to the backhaul transmission time, which can avoid a problem that a needed RTT is relatively long due to a relatively long backhaul transmission time. In this way, the CoMP technology can still be used in a scenario where the RTT remains unchanged and the backhaul transmission time is relatively long. In addition, in this embodiment, when the serving transmission point retransmits a signal to a UE, the cooperative transmission point reduces interference to the UE, which can increase the quality of signal transmission. Furthermore, in this embodiment, by obtaining a CSI, a base station can easily obtain channel information in real time and adjust a scheduling policy on an adaptive basis.

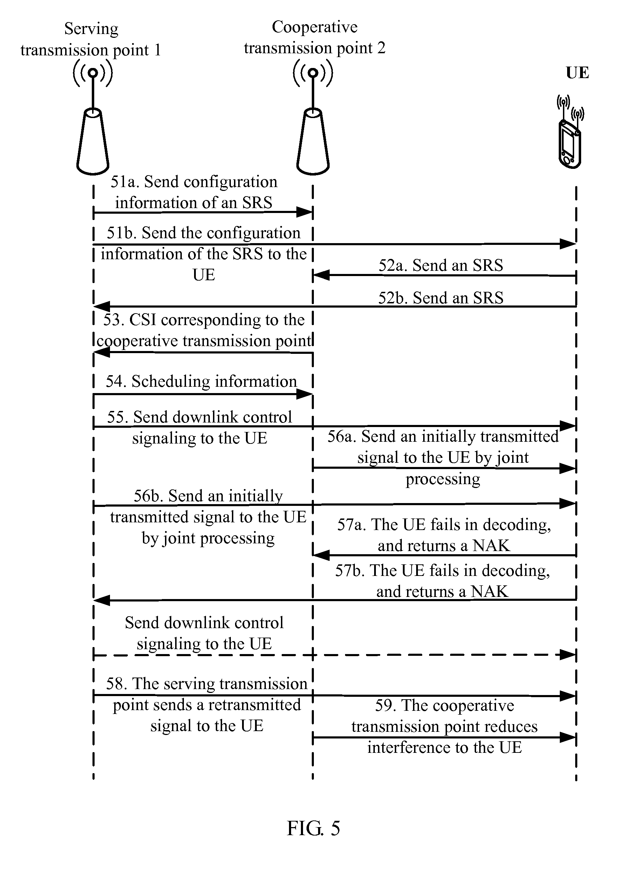

FIG. 5 is a schematic flowchart of a method according to a third embodiment of the present invention. As shown in FIG. 5, the method includes the following steps:

Step 51a: A serving transmission point sends configuration information of a sounding reference signal (Sounding Reference Signal, SRS) to a cooperative transmission point.

Step 51b: The serving transmission point sends the configuration information of the SRS to a UE.

The configuration information of the SRS includes at least one of time, a frequency, and an orthogonal code resource used to send an SRS.

Step 51a and step 51b are not limited to a time sequence.

Step 52a: The UE sends an SRS to the cooperative transmission point according to the configuration information of the SRS.

Step 52b: The UE sends the SRS to the serving transmission point according to the configuration information of the SRS.

In a TDD system, because uplink transmission and downlink transmission use the same frequency, an uplink channel and a downlink channel are reciprocal. Therefore, the serving transmission point and the cooperative transmission point can obtain a CSI of the downlink channel by detecting the SRS sent by the UE, and thereby perform proper scheduling for the downlink transmission.

Step 52a and step 52b are not limited to a time sequence.

Step 53: The cooperative transmission point learns an uplink CSI corresponding to the cooperative transmission point according to the SRS sent by the UE, and sends the CSI to the serving transmission point.

Step 54: The serving transmission point determines a CSI corresponding to the serving transmission point according to the SRS sent by the UE, determines scheduling information according to the CSI corresponding to the serving transmission point and the CSI corresponding to the cooperative transmission point, and sends the scheduling information to the cooperative transmission point, where, for example, the scheduling information may include an index of a precoding matrix.

Step 55: The serving transmission point determines downlink control signaling according to the CSI corresponding to the serving transmission point and the CSI corresponding to the cooperative transmission point, and sends the downlink control signaling to the UE.

Step 56a to step 56b: The serving transmission point and the cooperative transmission point send an initially transmitted signal to the UE by joint processing according to the scheduling information.

Step 57a: The cooperative transmission point receives feedback information of the UE.

Step 57b: The serving transmission point receives feedback information of the UE.

If the UE fails to decode the initially transmitted signal according to the downlink control signaling, the feedback information is NAK information.

Step 57a and step 57b are not limited to a time sequence. Step 58: When the feedback information received by the serving transmission point is NAK information, the serving transmission point sends a retransmitted signal corresponding to the initially transmitted signal to the UE.

Optionally, before sending a retransmitted signal to the UE, the serving transmission point may also send downlink control signaling to the UE.

Step 59: When the feedback information received by the cooperative transmission point is NAK information, the cooperative transmission point reduces interference to the UE when the serving transmission point sends the retransmitted signal to the UE. In an embodiment, the cooperative transmission point may reduce interference to the UE by using at least one of the following modes: scheduling no other UEs, reducing transmit power of the cooperative transmission point, using a precoding matrix causing less interference to the UE, and using a beam causing less interference to the UE.

For specific contents of step 56a to step 59, reference may be made to related contents of the first embodiment.

In this embodiment, a signal is retransmitted by a serving transmission point rather than retransmitted after the serving transmission point and a cooperative transmission point perform a coordinated operation. Because the signal is retransmitted not necessarily after signaling is transmitted in a backhaul, the time of signal retransmission is irrelevant to the backhaul transmission time, which can avoid a problem that a needed RTT is relatively long due to a relatively long backhaul transmission time. In this way, the CoMP technology can still be used in a scenario where the RTT remains unchanged and the backhaul transmission time is relatively long. In addition, in this embodiment, when the serving transmission point retransmits a signal to a UE, the cooperative transmission point reduces interference to the UE, which can increase the quality of signal transmission. In addition, in this embodiment, by obtaining an SRS, great overhead needed for a base station to send a CSI-RS can be avoided. It is only needed that the UE sends an SRS, and a downlink channel state can be obtained, which also achieves the effect of adaptive adjustment of a scheduling policy according to the channel state.

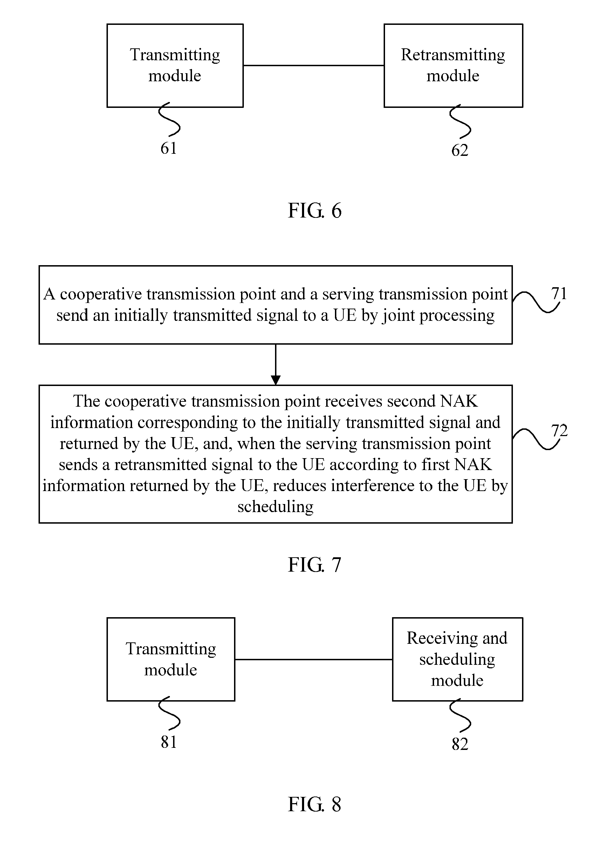

FIG. 6 is a schematic structural diagram of an apparatus according to a fourth embodiment of the present invention, where the apparatus includes a transmitting module 61 and a retransmitting module 62. The transmitting module 61 is configured to send downlink control signaling to a user equipment UE, so that the UE receives, according to the downlink control signaling, an initially transmitted signal sent by a serving transmission point and a cooperative transmission point by joint processing. The retransmitting module 62 is configured to receive first NAK information corresponding to the initially transmitted signal and returned by the UE, and send a retransmitted signal corresponding to the initially transmitted signal to the UE according to the first NAK information, where the initially transmitted signal also corresponds to second NAK information sent by the UE to the cooperative transmission point, where the second NAK information is used to instruct the cooperative transmission point to, when the serving transmission point sends the retransmitted signal to the UE, reduce interference to the UE.

In an embodiment, the apparatus may further includes: a first determining module, configured to send configuration information of a channel state information-reference signal CSI-RS and the CSI-RS to the UE, receive a channel state information CSI obtained by the UE by measuring, according to the configuration information of the CSI-RS, the CSI-RS, and determine the downlink control signaling according to the CSI.

Optionally, the first determining module is specifically configured to send configuration information of one set or multiple different sets of the CSI-RS to the UE, receive a CSI determined by the UE by measuring, according to the configuration information of the one set or multiple different sets of the CSI-RS, the CSI-RS, where the CSI corresponds to the configuration information of the one set or multiple different sets of the CSI-RS, and determine the downlink control signaling according to the CSI.

In an embodiment, the apparatus may further include: a second determining module, configured to send configuration information of a sounding reference signal SRS to the cooperative transmission point and the UE; receive the SRS sent by the UE, where the SRS is obtained by the UE according to the configuration information of the SRS; receive a CSI corresponding to the cooperative transmission point sent by the cooperative transmission point, where the CSI corresponding to the cooperative transmission point is determined by the cooperative transmission point by measuring, according to the configuration information of the SRS, the SRS sent by the UE; and determine a CSI corresponding to the serving transmission point according to the SRS sent by the UE, and determine the downlink control signaling according to the CSI corresponding to the serving transmission point and the CSI corresponding to the cooperative transmission point.

Optionally, the apparatus may further include: a scheduling module, configured to determine scheduling information according to the CSI corresponding to the serving transmission point and the CSI corresponding to the cooperative transmission point, and send the scheduling information to the cooperative transmission point, so that the cooperative transmission point sends, according to the scheduling information, the initially transmitted signal by joint transmission with the serving transmission point.

The apparatus may be specifically a serving transmission point.

In this embodiment, a signal is retransmitted by a serving transmission point rather than retransmitted after the serving transmission point and a cooperative transmission point perform a coordinated operation. Because the signal is retransmitted not necessarily after signaling is transmitted in a backhaul, the time of signal retransmission is irrelevant to the backhaul transmission time, which can avoid a problem that a needed RTT is relatively long due to a relatively long backhaul transmission time. In this way, the CoMP technology can still be used in a scenario where the RTT remains unchanged and the backhaul transmission time is long. In addition, when the serving transmission point sends a retransmitted signal, the cooperative transmission point reduces interference to the UE, which can increase the quality of retransmitted signal.

FIG. 7 is a schematic flowchart of a method according to a fifth embodiment of the present invention, including:

Step 71: A cooperative transmission point and a serving transmission point send an initially transmitted signal to a UE by joint processing.

For example, the cooperative transmission point sends an initially transmitted signal to the UE by joint processing with the serving transmission point at a set time point; or, the cooperative transmission point receives information used to indicate time for sending an initially transmitted signal and sent by the serving transmission point, and sends, according to the information used to indicate time for sending an initially transmitted signal, an initially transmitted signal to the UE by joint processing with the serving transmission point.

The set time point may be represented by a fixed value after the serving transmission point sends UE-related information used to schedule the UE.

Further, the fixed value includes a fixed value set for the serving transmission point and a fixed value set for the cooperative transmission point, wherein the fixed value set for the serving transmission point is different from the fixed value set for the cooperative transmission point.

Step 72: The cooperative transmission point receives second NAK information corresponding to the initially transmitted signal and returned by the UE, and, when the serving transmission point sends a retransmitted signal to the UE according to first NAK information returned by the UE, reduces interference to the UE with scheduling.

For example, the scheduling mode may be at least one of the following modes:
scheduling no other UEs than the UE;
reducing transmit power of the cooperative transmission point;
using a precoding matrix causing less interference to the UE; and
using a beam causing less interference to the UE.

In this embodiment, before the sending an initially transmitted signal, the method may further include: receiving configuration information of an SRS sent by the serving transmission point; measuring, according to the configuration information of the SRS, the SRS sent by the UE to determine a CSI corresponding to the cooperative transmission point; and sending the CSI corresponding to the cooperative transmission point to the serving transmission point, so that the serving transmission point determines scheduling information according to a CSI corresponding to the serving transmission point and the CSI corresponding to the cooperative transmission point.

Further, the sending an initially transmitted signal may be as follows: receiving the scheduling information sent by the serving transmission point, and sending, according to the scheduling information, the initially transmitted signal to the UE by joint processing with the serving transmission point.

In this embodiment, a signal is retransmitted by a serving transmission point rather than retransmitted after the serving transmission point and a cooperative transmission point perform a coordinated operation. Because the signal is retransmitted not necessarily after signaling is transmitted in a backhaul, the time of signal retransmission is irrelevant to the backhaul transmission time, which can avoid a problem that a needed RTT is relatively long due to a relatively long backhaul transmission time. In this way, the CoMP technology can still be used in a scenario where the RTT remains unchanged and the backhaul transmission time is long. In addition, when the serving transmission point sends a retransmitted signal, the cooperative transmission point reduces interference to the UE, which can increase the quality of the retransmitted signal.

FIG. 8 is a schematic structural diagram of an apparatus according to a sixth embodiment of the present invention, where the apparatus includes a transmitting module 81 and a receiving and scheduling module 82. The transmitting module 81 is configured to send an initially transmitted signal to a user equipment UE by joint processing with a serving transmission point. The receiving and scheduling module 82 is configured to receive second NAK information corresponding to the initially transmitted signal returned by the UE, and, when the serving transmission point sends a retransmitted signal to the UE according to first NAK information returned by the UE, reduce interference to the UE with scheduling.

The receiving and scheduling module 82 may be specifically configured to receive second NAK information corresponding to the initially transmitted signal and returned by the UE, and, when the serving transmission point sends the retransmitted signal to the UE according to the first NAK information returned by the UE, reduce interference to the UE by using at least one of the following modes: scheduling no other UEs than the UE; reducing transmit power of the cooperative transmission point; using a precoding matrix causing less interference to the UE; and using a beam causing less interference to the UE.

Optionally, the transmitting module 81 is specifically configured to: send an initially transmitted signal to the UE by joint processing with the serving transmission point at a set time point; or, receive information used to indicate time for sending an initially transmitted signal and sent by the serving transmission point, and send, according to the information used to indicate time for sending an initially transmitted signal, an initially transmitted signal to the UE by joint processing with the serving transmission point.

Further, the apparatus may further include a measuring module, configured to receive configuration information of a sounding reference signal SRS sent by the serving transmission point, measure, according to the configuration information of the SRS, the SRS sent by the UE, determine a CSI corresponding to the cooperative transmission point, and send the CSI corresponding to the cooperative transmission point to the serving transmission point, so that the serving transmission point determines scheduling information according to the CSI corresponding to the serving transmission point and the CSI corresponding to the cooperative transmission point.

Optionally, the transmitting module 81 is specifically configured to receive the scheduling information sent by the serving transmission point, and send, according to the scheduling information, the initially transmitted signal to the UE by joint processing with the serving transmission point.

The apparatus provided in this embodiment may be specifically a cooperative transmission point.

In this embodiment, a signal is retransmitted by a serving transmission point rather than retransmitted after the serving transmission point and a cooperative transmission point perform a coordinated operation. Because the signal is retransmitted not necessarily after signaling is transmitted in a backhaul, the time of signal retransmission is irrelevant to the backhaul transmission time, which can avoid a problem that a needed RTT is relatively long due to a relatively long backhaul transmission time. In this way, the CoMP technology can still be used in a scenario where the RTT remains unchanged and the backhaul transmission time is long. In addition, when the serving transmission point sends a retransmitted signal, the cooperative transmission point reduces interference to the UE, which can increase the quality of the retransmitted signal.

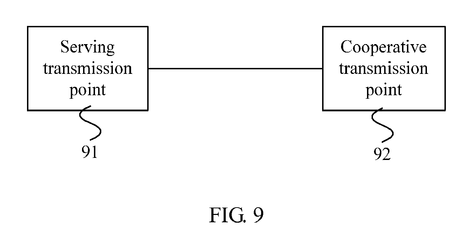

FIG. 9 is a schematic structural diagram of a system according to a seventh embodiment of the present invention. The system includes a serving transmission point 91 and a cooperative transmission point 92. The serving transmission point 91 is configured to send downlink control signaling to a UE. The serving transmission point 91 and the cooperative transmission point 92 are configured to send an initially transmitted signal to the UE by joint processing. The serving transmission point 91 is further configured to receive first NAK information corresponding to the initially transmitted signal and returned by the UE, and send a retransmitted signal corresponding to the initially transmitted signal to the UE according to the first NAK information. The cooperative transmission point 92 is further configured to receive second NAK information corresponding to the initially transmitted signal and returned by the UE, and, according to the second NAK information, when the serving transmission point sends the retransmitted signal to the UE, reduce interference to the UE with scheduling.

In an embodiment, the cooperative transmission point 92 is specifically configured to, after receiving the second NAK information, and, when the serving transmission point sends the retransmitted signal to the UE, reduce interference to the UE by using at least one of the following modes: scheduling no other UEs than the UE; reducing transmit power of the cooperative transmission point; using a precoding matrix causing less interference to the UE; and using a beam causing less interference to the UE.

In an embodiment, the serving transmission point 91 and the cooperative transmission point 92 are specifically configured to send the initially transmitted signal by joint processing at a set time point; or the serving transmission point 91 is specifically configured to send, to the cooperative transmission point 92, information used to indicate time for sending an initially transmitted signal, and the cooperative transmission point 92 is specifically configured to send, according to the information used to indicate time for sending an initially transmitted signal, the initially transmitted signal by joint processing with the serving transmission point 91.

Optionally, the set time point is represented by a fixed value after the serving transmission point 91 sends, to the cooperative transmission point 92, UE-related information used to schedule the UE.

Optionally, the serving transmission point 91 is specifically configured to set the fixed value, and the cooperative transmission point 92 is specifically configured to set the fixed value, where the fixed value set for the serving transmission point 91 is different from the fixed value set for the cooperative transmission point 92.

The serving transmission point 91 may specifically be shown in FIG. 6. The cooperative transmission point 92 may specifically be shown in FIG. 8.

In this embodiment, a signal is retransmitted by a serving transmission point rather than retransmitted after the serving transmission point and a cooperative transmission point perform a coordinated operation. Because the signal is retransmitted not necessarily after signaling is transmitted in a backhaul, the time of signal retransmission is irrelevant to the backhaul transmission time, which can avoid a problem that a needed RTT is relatively long due to a relatively long backhaul transmission time. In this way, the CoMP technology can still be used in a scenario where the RTT remains unchanged and the backhaul transmission time is long. In addition, when the serving transmission point sends a retransmitted signal, the cooperative transmission point reduces interference to the UE, which can increase the quality of the retransmitted signal. It is understood that related features in the foregoing methods and devices may serve as references for each other. In addition, "first", "second", and the like in the foregoing embodiments are used to differentiate the embodiments only, and do not represent superiority or inferiority of the embodiments.

Persons of ordinary skill in the art should understand that, all or a part of the steps of the foregoing method embodiments may be implemented by a program instructing relevant hardware. The program may be stored in a computer readable storage medium. When the program runs, the steps of the foregoing method embodiments are performed. The storage medium may be any medium that is capable of storing program codes, such as a ROM, a RAM, a magnetic disk, and an optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof, without departing from the spirit and scope of the technical solutions of the embodiments of the present invention.

## Claims

1. A method for coordinated multiple point transmission/reception CoMP retransmission, comprising:
sending downlink control signaling to a user equipment UE, so that the UE receives, according to the downlink control signaling, an initially transmitted signal sent by a serving transmission point and a cooperative transmission point by joint processing; and
receiving first NAK information corresponding to the initially transmitted signal and returned by the UE, and sending to the UE, according to the first NAK information, a retransmitted signal corresponding to the initially transmitted signal, wherein the initially transmitted signal also corresponds to second NAK information sent by the UE to the cooperative transmission point, wherein the second NAK information is used to instruct the cooperative transmission point to, when the serving transmission point sends the retransmitted signal to the UE, reduce interference to the UE with scheduling.

2. The method according to claim 1, wherein the second NAK information is used to instruct the cooperative transmission point to, when the serving transmission point sends the retransmitted signal to the UE, reduce interference to the UE with scheduling comprises that:
the second NAK information is used to instruct the cooperative transmission point to, when the serving transmission point sends the retransmitted signal to the UE, reduce interference to the UE by using at least one of the following modes:
scheduling no other UEs than the UE;
reducing transmit power of the cooperative transmission point;
using a precoding matrix causing less interference to the UE; and
using a beam causing less interference to the UE.

3. The method according to claim 1 or 2, wherein the initially transmitted signal sent by a serving transmission point and a cooperative transmission point by joint processing comprises:
an initially transmitted signal sent by the serving transmission point and the cooperative transmission point by joint processing at a set time point;
or,
an initially transmitted signal sent by the cooperative transmission point with the serving transmission point by joint processing according to information sent by the serving transmission point to the cooperative transmission point and used to indicate time for sending an initially transmitted signal.

4. The method according to claim 3, wherein:
the set time point is represented by a fixed value after the serving transmission point sends, to the cooperative transmission point, UE-related information used to schedule the UE.

5. The method according to claim 4, wherein:
the fixed value comprises: a fixed value set for the serving transmission point and a fixed value set for the cooperative transmission point, wherein the fixed value set for the serving transmission point is different from the fixed value set for the cooperative transmission point.

6. The method according to claim 1, further comprising:
sending configuration information of a channel state information-reference signal CSI-RS and the CSI-RS to the UE; and
receiving a channel state information CSI determined by the UE by measuring the CSI-RS according to the configuration information of the CSI-RS, and determining the downlink control signaling according to the CSI.

7. The method according to claim 6, wherein the sending configuration information of a CSI-RS and the CSI-RS to the UE comprises:
sending, by the serving transmission point, configuration information of one set or multiple different sets of the CSI-RS to the UE; and
the receiving a CSI determined by the UE by measuring, according to the configuration information comprises:
receiving, by the serving transmission point, a CSI obtained by the UE by measuring, according to the configuration information of the one set or multiple different sets of the CSI-RS, the CSI-RS, wherein the CSI corresponds to the configuration information of the one set or multiple different sets of the CSI-RS.

8. The method according to claim 6, wherein:
the CSI comprises one CSI and the CSI is used to indicate joint channel state information corresponding to the serving transmission point and the cooperative transmission point; or
the CSI comprises at least two CSIs and the at least two CSIs are used to indicate channel state corresponding to the serving transmission point and channel state corresponding to the cooperative transmission point, respectively.

9. The method according to claim 1, further comprising:
sending configuration information of a sounding reference signal SRS to the cooperative transmission point and the UE, and receiving the SRS sent by the UE, wherein the SRS is obtained by the UE according to the configuration information of the SRS;
receiving a CSI corresponding to the cooperative transmission point sent by the cooperative transmission point, wherein the CSI corresponding to the cooperative transmission point is determined by the cooperative transmission point by measuring, according to the configuration information of the SRS, the SRS sent by the UE; and
determining a CSI corresponding to the serving transmission point according to the SRS sent by the UE, and determining the downlink control signaling according to the CSI corresponding to the serving transmission point and the CSI corresponding to the cooperative transmission point.

10. The method according to claim 9, further comprising:
determining scheduling information according to the CSI corresponding to the serving transmission point and the CSI corresponding to the cooperative transmission point, and sending the scheduling information to the cooperative transmission point, so that the cooperative transmission point sends, according to the scheduling information, the initially transmitted signal by joint transmission with the serving transmission point.

11. An apparatus for coordinated multiple point transmission/reception CoMP retransmission, comprising:
a transmitting module, configured to send downlink control signaling to a user equipment UE, so that the UE receives, according to the downlink control signaling, an initially transmitted signal sent by a serving transmission point and a cooperative transmission point by joint processing; and
a retransmitting module, configured to receive first NAK information corresponding to the initially transmitted signal and returned by the UE, and send, according to the first NAK information, a retransmitted signal corresponding to the initially transmitted signal to the UE, wherein the initially transmitted signal also corresponds to second NAK information sent by the UE to the cooperative transmission point, wherein the second NAK information is used to instruct the cooperative transmission point to, when the serving transmission point sends the retransmitted signal to the UE, reduce interference to the UE with scheduling.

12. The apparatus according to claim 11, further comprising:
a first determining module, configured to send configuration information of a channel state information-reference signal CSI-RS and the CSI-RS to the UE, receive a channel state information CSI determined by the UE by measuring, according to the configuration information of the CSI-RS, the CSI-RS, and determine, according to the CSI, the downlink control signaling sent by the transmitting module.

13. The apparatus according to claim 12, wherein:
the first determining module is specifically configured to send configuration information of one set or multiple different sets of the CSI-RS and the CSI-RS to the UE, receive a CSI determined by the UE by measuring, according to the configuration information of the one set or multiple different sets of the CSI-RS, the CSI-RS, and determine the downlink control signaling according to the CSI, wherein the CSI corresponds to the configuration information of the one set or multiple different sets of the CSI-RS.

14. The apparatus according to claim 11, further comprising:
a second determining module, configured to send configuration information of a sounding reference signal SRS to the cooperative transmission point and the UE, and receive the SRS sent by the UE, wherein the SRS is obtained by the UE according to the configuration information of the SRS; receive a CSI corresponding to the cooperative transmission point sent by the cooperative transmission point, wherein the CSI corresponding to the cooperative transmission point is determined by the cooperative transmission point by measuring, according to the configuration information of the SRS, the SRS sent by the UE; determine a CSI corresponding to the serving transmission point according to the SRS sent by the UE, and determine, according to the CSI corresponding to the serving transmission point and the CSI corresponding to the cooperative transmission point, the downlink control signaling sent by the transmitting module.

15. The apparatus according to claim 14, further comprising:
a scheduling module, configured to determine scheduling information according to the CSI corresponding to the serving transmission point and the CSI corresponding to the cooperative transmission point obtained by the second determining module, and send the scheduling information to the cooperative transmission point, so that the cooperative transmission point sends, according to the scheduling information, the initially transmitted signal by joint transmission with the serving transmission point.

16. A system for coordinated multiple point transmission/reception CoMP retransmission, comprising:
a serving transmission point and a cooperative transmission point,
wherein the serving transmission point is configured to send downlink control signaling to a user equipment UE;
the serving transmission point and the cooperative transmission point are configured to send an initially transmitted signal to the UE by joint processing;
the serving transmission point is further configured to receive first NAK information corresponding to the initially transmitted signal and returned by the UE, and send a retransmitted signal corresponding to the initially transmitted signal to the UE according to the first NAK information; and
the cooperative transmission point is further configured to receive second NAK information corresponding to the initially transmitted signal and returned by the UE, and, according to the second NAK information, when the serving transmission point sends the retransmitted signal to the UE, reduce interference to the UE with scheduling.

17. The system according to claim 16, wherein:
the cooperative transmission point is specifically configured to, after receiving the second NAK information, when the serving transmission point sends the retransmitted signal to the UE, reduce interference to the UE by using at least one of the following modes:
scheduling no other UEs than the UE;
reducing transmit power of the cooperative transmission point;
using a precoding matrix causing less interference to the UE; and
using a beam causing less interference to the UE.

18. The system according to claim 16 or 17, wherein:
the serving transmission point and the cooperative transmission point are specifically configured to send the initially transmitted signal by joint processing at a set time point;
or,
the serving transmission point is specifically configured to send, to the cooperative transmission point, information used to indicate time for sending an initially transmitted signal, and the cooperative transmission point is specifically configured to send, according to the information used to indicate time for sending an initially transmitted signal, the initially transmitted signal by joint processing with the serving transmission point.

19. The system according to claim 18, wherein:
the set time point is represented by a fixed value after the serving transmission point sends, to the cooperative transmission point, UE-related information used to schedule the UE.

20. The system according to claim 19, wherein:
the serving transmission point is specifically configured to set the fixed value, and the cooperative transmission point is specifically configured to set the fixed value, wherein the fixed value set for the serving transmission point is different from the fixed value set for the cooperative transmission point.

21. A method for coordinated multiple point transmission/reception CoMP retransmission, comprising:
Sending an initially transmitted signal to a user equipment UE by joint processing with a serving transmission point; and
receiving second NAK information corresponding to the initially transmitted signal and returned by the UE, and, when the serving transmission point sends a retransmitted signal to the UE according to first NAK information returned by the UE, reducing interference to the UE with scheduling.

22. The method according to claim 21, wherein the reducing, when the serving transmission point sends a retransmitted signal to the UE according to first NAK information returned by the UE, interference to the UE with scheduling comprises:
when the serving transmission point sends the retransmitted signal to the UE according to the first NAK information returned by the UE, reducing interference to the UE by using at least one of the following modes:
scheduling no other UEs than the UE;
reducing transmit power of the cooperative transmission point;
using a precoding matrix causing less interference to the UE; and
using a beam causing less interference to the UE.

23. The method according to claim 21 or 22, wherein the sending an initially transmitted signal to a user equipment UE by joint processing with a serving transmission point comprises:
sending the initially transmitted signal to the UE by joint processing with the serving transmission point at a set time point;
or,
receiving information used to indicate time for sending an initially transmitted signal and sent by the serving transmission point, and sending, according to the information used to indicate time for sending an initially transmitted signal, the initially transmitted signal to the UE by joint processing with the serving transmission point.

24. The method according to claim 23, wherein the set time point is represented by a fixed value after the serving transmission point sends UE-related information used to schedule the UE.

25. The method according to claim 24, wherein:
the fixed value comprises a fixed value set for the serving transmission point and a fixed value set for the cooperative transmission point, wherein the fixed value set for the serving transmission point is different from the fixed value set for the cooperative transmission point.

26. The method according to claim 21 or 22, further comprising:
receiving configuration information of a sounding reference signal SRS sent by the serving transmission point; and
determining a channel state information CSI corresponding to the cooperative transmission point by measuring, according to the configuration information of the SRS, the SRS sent by the UE, and sending the CSI corresponding to the cooperative transmission point to the serving transmission point, so that the serving transmission point determines scheduling information according to the CSI corresponding to the serving transmission point and the CSI corresponding to the cooperative transmission point.

27. The method according to claim 26, wherein the sending an initially transmitted signal to a user equipment UE by joint processing with a serving transmission point comprises:
receiving the scheduling information sent by the serving transmission point, and sending, according to the scheduling information, the initially transmitted signal to the UE by joint processing with the serving transmission point.

28. An apparatus for coordinated multiple point transmission/reception CoMP retransmission, comprising:
a transmitting module, configured to send an initially transmitted signal to a user equipment UE by joint processing with a serving transmission point; and
a receiving and scheduling module, configured to receive second NAK information corresponding to the initially transmitted signal and returned by the UE, and, when the serving transmission point sends a retransmitted signal to the UE according to first NAK information returned by the UE, reduce interference to the UE with scheduling.

29. The apparatus according to claim 28, wherein:
the receiving and scheduling module is specifically configured to receive the second NAK information corresponding to the initially transmitted signal and returned by the UE, and, when the serving transmission point sends the retransmitted signal to the UE according to the first NAK information returned by the UE, reduce interference to the UE by using at least one of the following modes:
scheduling no other UEs than the UE;
reducing transmit power of the cooperative transmission point;
using a precoding matrix causing less interference to the UE; and
using a beam causing less interference to the UE.

30. The apparatus according to claim 28 or 29, wherein:
the transmitting module is specifically configured to send the initially transmitted signal to the UE by joint processing with the serving transmission point at a set time point; or, receive information used to indicate time for sending an initially transmitted signal and sent by the serving transmission point, and send, according to the information used to indicate time for sending an initially transmitted signal, the initially transmitted signal to the UE by joint processing with the serving transmission point.

31. The apparatus according to claim 28 or 29, further comprising:
a measuring module, configured to receive sounding configuration information of a reference signal SRS sent by the serving transmission point, measure, according to the configuration information of the SRS, the SRS sent by the UE to determine a channel state information CSI corresponding to the cooperative transmission point, and send the CSI corresponding to the cooperative transmission point to the serving transmission point, so that the serving transmission point determines scheduling information according to a CSI corresponding to the serving transmission point and the CSI corresponding to the cooperative transmission point.

32. The apparatus according to claim 31, wherein:
the transmitting module is specifically configured to receive the scheduling information sent by the serving transmission point, and send, according to the scheduling information, the initially transmitted signal to the UE by joint processing with the serving transmission point.
